(19) Europäisches Patentamt
European Patent Office
Office européen des brevets

(11) EP 2 635 086 A1

(12) **EUROPEAN PATENT APPLICATION**
published in accordance with Art. 153(4) EPC

(43) Date of publication:
**04.09.2013 Bulletin 2013/36**

(21) Application number: **11835594.0**

(22) Date of filing: **13.10.2011**

(51) Int Cl.:
***H04W 88/06*** *(2009.01)*

(86) International application number:
**PCT/CN2011/080765**

(87) International publication number:
**WO 2012/055321 (03.05.2012 Gazette 2012/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.10.2010 CN 201010518295**

(71) Applicant: **ZTE Corporation**
**Shenzhen, Guangdong 518057 (CN)**

(72) Inventors:
- **YOU, Aimin**
  **Shenzhen**
  **Guangdong 518057 (CN)**
- **YANG, Zeliang**
  **Shenzhen**
  **Guangdong 518057 (CN)**
- **ZONG, Baiqing**
  **Shenzhen**
  **Guangdong 518057 (CN)**

(74) Representative: **Vossius & Partner**
**Siebertstrasse 4**
**81675 München (DE)**

(54) **SPECTRAL INTERFERENCE CANCELLATION DEVICE, SYSTEM AND METHOD OF DUAL-MODE COMMUNICATION SYSTEM**

(57) The disclosure provides a spectral interference cancellation method, a spectral interference cancellation system and a spectral interference cancellation device for a dual-mode communication system. The method comprises: a receiver receiving a spectral overlapping signal, performing interference signal baseband demodulation and interference signal reconstruction processing on the spectral overlapping signal to reconstruct an interference filtered signal, and performing interference cancellation processing on the interference filtered signal with the delayed spectral overlapping signal. The device comprises: an interference cancellation module, an interference signal baseband demodulation module and an interference signal reconstruction module, wherein the interference signal baseband demodulation module is configured to demodulate out an interference baseband signal according to a spectral overlapping signal; the interference signal reconstruction module reconstructs an interference filtered signal using the interference baseband signal; the interference cancellation module performs, using the interference filtered signal, interference cancellation processing on the spectral overlapping signal processed by a delay module, to obtain a spread-spectrum filtered signal. The disclosure reduces loss of Signal-to-Noise Ratio (SNR) of useful information in a spread-spectrum signal during the process of spectral interference processing, and improves the system performance of a spread-spectrum signal receiver.



Printed by Jouve, 75001 PARIS (FR)

**(Cont. next page)**

Fig. 3

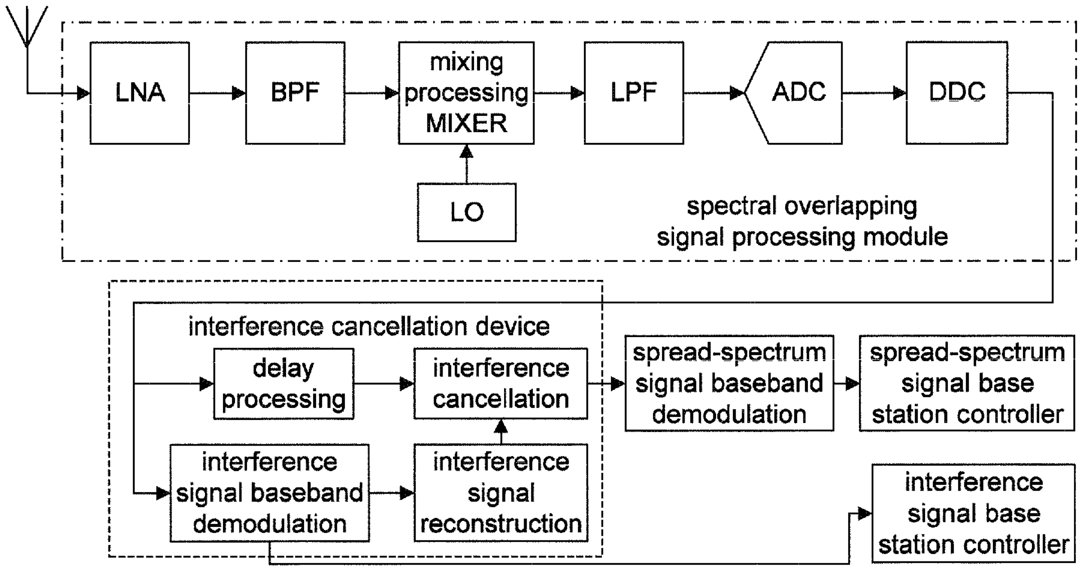
LNA
BPF
mixing processing MIXER
LPF
ADC
DDC
LO
spectral overlapping signal processing module
interference cancellation device
delay processing
interference cancellation
interference signal baseband demodulation
interference signal reconstruction
spread-spectrum signal baseband demodulation
spread-spectrum signal base station controller
interference signal base station controller

## Description

### TECHNICAL FIELD

The disclosure relates to digital signal processing in the field of mobile communication, and in particular to a spectral interference cancellation device, a spectral interference cancellation system and a spectral interference cancellation method for a dual-mode communication system.

### BACKGROUND

In future 4G times, 2G system, 3G system and Long Term Evolution (LTE) system would coexist for a long time; with the more and more serious scarcity of spectrum resources, operators expect to deploy simultaneously Global System for Mobile communication & Universal Mobile Telephone System (GSM & UMTS), GSM & Code Division Multiple Access (GSM & CDMA), and GSM & LTE networks in a limited spectrum range, so as to improve spectrum utilization rate to the greatest extent. However, this deployment could cause spectral overlap between signals of different systems, thereby causing mutual interference between uplink and downlink receiving signals, serious shrinkage of coverage and capacity, and more seriously causing the system to be unavailable; therefore, spectral overlapping signal must be processed with cancellation processing.

In mobile communication system, common spectral overlapping interference cancellation technologies include: time-domain interference suppression technology, transform-domain interference suppression technology and code assistant technology. The basic idea of the time-domain interference suppression technology is to achieve the suppression to interference by using the difference of predictability between an interference signal and a spread-spectrum signal. The time-domain interference suppression technology is mainly divided into linear prediction adaptive filtering and non-linear prediction adaptive filtering. The non-linear prediction adaptive filtering makes a great improvement in Signal-to-Noise Ratio (SNR) processing compared with the linear prediction adaptive filtering; however, the non-linear filtering has a very complex computation. For the linear filtering, there is a linear prediction time-domain interference suppression technology based on filter bank existing in the prior art; this method can effectively suppress interference without much priori knowledge of interference signal; however, the prediction value contains the information of part of spread-spectrum signals; thus, useful spread-spectrum signals are partially suppressed when suppressing interference. Therefore, coverage and capacity shrinkage of the spread-spectrum signal are caused to some extent. Thus, how to design a spectral interference cancellation technology, which can reduce the suppressed information amount of the spread-spectrum signal, can improve the SNR of the spread-spectrum signal and can guarantee the coverage rate and capacity of the spread-spectrum signal to the greatest extent, becomes an increasingly concerned problem in the industry.

### SUMMARY

The technical problem to be solved in the disclosure is to provide a spectral interference cancellation device and a spectral interference cancellation method for a dual-mode communication system, which can reduce loss of SNR of useful information in a spread-spectrum signal effectively during the process of spectral interference cancellation processing, can guarantee the coverage rate and capacity of the spread-spectrum signal as far as possible and can improve the performance of a spread-spectrum signal system receiver greatly.

In order to solve the technical problem above, the disclosure adopts a technical scheme as follows.

A spectral interference cancellation device for a dual-mode communication system, includes a first branch and a second branch, wherein the first branch includes an interference signal baseband demodulation module and an interference signal reconstruction module which are connected in turn; the second branch includes a delay processing module and an interference cancellation module which are connected in turn;

the interference signal baseband demodulation module is configured to perform interference signal baseband demodulation processing on a received spectral overlapping signal to obtain an interference baseband signal; the interference signal reconstruction module is configured to perform interference signal reconstruction processing on the interference baseband signal to reconstruct an interference filtered signal, and to send the interference filtered signal to the interference cancellation module;

the delay processing module is configured to perform first delay processing on the received spectral overlapping signal and to send the spectral overlapping signal subjected to the first delay processing to the interference cancellation module;

the interference cancellation module, using the interference filtered signal, performs interference cancellation processing on the spectral overlapping signal subjected to the delay processing to obtain a spread-spectrum filtered signal.

In one embodiment of the disclosure, the interference signal baseband demodulation module includes a first frequency-shift sub-module, a low-pass filtering sub-module, a digital down-conversion sub-module, a demodulation sub-module, a data storage sub-module, a decoding sub-module which are connected in turn, so as to perform first

frequency-shift processing, low-pass filtering processing, digital down-conversion processing, demodulation processing, data storage and decoding processing in turn on the received spectral overlapping signal to obtain the interference baseband signal.

In another embodiment of the disclosure, the interference signal reconstruction module includes a third branch and a fourth branch, wherein the third branch includes a delay sub-module and a channel estimation sub-module which are connected in turn; the fourth branch includes a coding sub-module and a modulation sub-module which are connected in turn;

the coding sub-module codes the received interference baseband signal to obtain an interference coded signal; the modulation sub-module modulates the interference coded signal to obtain an interference modulated signal;

the delay sub-module performs second delay processing on a received interference down-converted signal obtained after processed by the digital down-conversion sub-module to obtain an interference delayed signal; the channel estimation sub-module performs channel estimation using the interference delayed signal and the interference modulated signal to obtain an interference estimated signal;

the interference signal reconstruction module further includes an interference reconstruction filtering sub-module, a digital up-conversion sub-module and a second frequency-shift sub-module which are connected in turn; the interference reconstruction filtering sub-module performs interference reconstruction filtering processing on the received interference estimated signal and interference modulated signal to obtain an interference reconstructed baseband signal; the digital up-conversion sub-module performs digital up-conversion processing on the interference reconstructed baseband signal to obtain an interference up-converted signal; the second frequency-shift sub-module performs second frequency-shift processing on the interference up-converted signal to obtain an interference filtered signal.

In one embodiment of the disclosure, the interference reconstruction filtering sub-module includes a filter coefficient estimation unit, a filter coefficient adjustment unit, a power estimation unit, a noise estimation unit and a reconstruction filtering unit;

the filter coefficient estimation unit estimates a filter coefficient using the pilot information of a received interference demodulated signal obtained after processed by the demodulation sub-module and the pilot information of the interference estimated signal, to obtain a filter estimated coefficient;

the power estimation unit is configured to receive the interference estimated signal and to perform power estimation, so as to obtain the power of the interference estimated signal;

the noise estimation unit is configured to receive all noises during reconstruction filtering process and to perform noise coefficient estimation, to obtain a noise estimated coefficient;

the filter coefficient adjustment unit is configured to adjust the filter coefficient using the filter estimated coefficient and the noise estimated coefficient, to obtain a filter adjusted coefficient; and

the reconstruction filtering unit is configured to perform reconstruction filtering processing using the interference modulated signal and the filter adjusted coefficient, to obtain an interference reconstructed baseband signal.

In one embodiment of the disclosure, the spectral overlapping signal includes three spectral overlapping combinations, namely, GSM & UMTS overlapping signal, GSM & CDMA overlapping signal and GSM & LTE overlapping signal; if the interference filtered signal is one signal in any combination of the three spectral overlapping combinations, the spread-spectrum filtered signal is the other signal in said any combination.

The disclosure further provides a spectral interference cancellation method for a dual-mode communication system, includes:

A. a receiver receiving a spectral overlapping signal in the dual-mode communication system;

B. the receiver performing interference signal baseband demodulation processing on the received spectral overlapping signal to obtain an interference baseband signal;

C. the receiver performing interference signal reconstruction processing on the interference baseband signal to reconstruct an interference filtered signal;

D. the receiver performing, using the interference filtered signal, interference cancellation processing on the spectral overlapping signal subjected to first delay processing, to obtain a spread-spectrum filtered signal.

In one embodiment of the disclosure, the step of the receiver performing interference signal baseband demodulation processing using the spectral overlapping signal further includes:

performing, by the receiver, first frequency-shift processing, low-pass filtering processing, digital down-conversion processing, demodulation processing, data storage and decoding processing in turn on the received spectral overlapping signal to obtain the interference baseband signal.

In one embodiment of the disclosure, when the receiver performs interference signal reconstruction processing, the method further includes:

C1: performing, by the receiver, coding processing and modulation processing in turn on the interference baseband signal to obtain an interference modulated signal; meanwhile, further performing second delay processing on a received interference down-converted signal obtained after processed by the digital down-conversion sub-module to obtain an interference delayed signal, and performing channel estimation using the interference delayed signal and the interference modulated signal to obtain an interference estimated signal;

C2: performing, by the receiver, interference reconstruction filtering processing on the received interference estimated signal and interference modulated signal to obtain an interference reconstructed baseband signal;

C3: performing, by the receiver, digital up-conversion processing and second frequency-shift processing in turn on the interference reconstructed baseband signal to obtain an interference filtered signal.

In one embodiment of the disclosure, when the receiver performs interference signal reconstruction processing, the method further includes:

C11: performing, by the receiver, demodulation and third delay processing on the interference down-converted signal obtained after digital down-conversion processing, to obtain an interference demodulated signal and an interference delayed signal respectively;

C12: modulating, by the receiver, the interference demodulated signal to obtain an interference modulated signal;

C13: estimating, by the receiver, a channel response using the interference modulated signal and the interference delayed signal to obtain an interference estimated signal;

C14: performing, by the receiver, interference reconstruction filtering processing using the interference modulated signal and the interference estimated signal to obtain an interference reconstructed baseband signal;

C15: performing, by the receiver, digital up-conversion processing and second frequency-shift processing in turn on the interference reconstructed baseband signal to obtain an interference filtered signal.

In one embodiment of the disclosure, the step of the receiver performing interference reconstruction filtering processing further includes:

C21: performing, by the receiver, filter coefficient estimation using the pilot information of a received interference demodulated signal obtained after processed by the demodulation sub-module and the pilot information of the interference estimated signal, to obtain a filter estimated coefficient;

C22: performing, by the receiver, power estimation on the received interference estimated signal to obtain the power of the interference estimated signal;

C23: performing, by the receiver, noise coefficient estimation on all noises during reconstruction filtering process to obtain a noise estimated coefficient;

C24: performing, by the receiver, filter coefficient adjustment using the filter estimated coefficient and the noise estimated coefficient to obtain a filter adjusted coefficient;

C25: performing, by the receiver, reconstruction filtering processing using the interference modulated signal and the filter adjusted coefficient to obtain an interference reconstructed baseband signal.

The disclosure further provides a spectral interference cancellation system for a dual-mode communication system, includes a spectral overlapping signal processing device, a spread-spectrum signal baseband demodulation device, a spread-spectrum signal base station controller, an interference signal base station controller, and further includes the spectral interference cancellation device mentioned in claim 1; wherein
the spectral overlapping signal processing device receives an original spectral overlapping signal, and performs radio frequency and intermediate frequency processing to obtain a spectral overlapping signal; the spectral interference

cancellation device receives the spectral overlapping signal and performs interference cancellation processing, and sends an obtained interference baseband signal to the interference signal base station controller, sends an obtained spread-spectrum filtered signal to the spread-spectrum signal baseband demodulation device; the spread-spectrum signal baseband demodulation device performs baseband demodulation on the spread-spectrum filtered signal and sends a spread-spectrum baseband demodulated signal obtained after processing to the spread-spectrum signal base station controller.

With the technical scheme above, the disclosure has advantages as follows: in a dual-mode communication system, the receiver performs interference signal baseband demodulation processing and interference signal reconstruction processing in turn by using a received spectral overlapping signal to reconstruct an interference filtered signal, and performs, by using the reconstructed interference filtered signal, interference cancellation processing on the spectral overlapping signal subjected to delay processing. In this way, loss of SNR of useful information in a spread-spectrum signal is reduced to the greatest extent during the process of interference cancellation processing, the coverage rate and capacity of the spread-spectrum signal is guaranteed and the system performance of a spread-spectrum signal receiver is improved.

## BRIEF DESCRIPTION OF THE DRAWINGS

Fig. 1 shows a diagram of spectrum overlapping of a GSM and UMTS signal in the prior art;

Fig. 2 shows a diagram of an adaptive notch filtering processing system for a GSM and UMTS spectral overlapping interference frequency domain in the prior art;

Fig. 3 shows a diagram of a spectral interference cancellation system according to the disclosure;

Fig. 4 shows a structure diagram of an interference signal baseband demodulation module according to one embodiment of the disclosure;

Fig. 5 shows a structure diagram of an interference signal reconstruction module according to one embodiment of the disclosure;

Fig. 6 shows a structure diagram of an interference reconstruction filtering sub-module according to one embodiment of the disclosure;

Fig. 7 shows a diagram of a GSM & UMTS spectral overlapping signal according to one embodiment of the disclosure;

Fig. 8 shows a diagram of a GSM & UMTS spectral overlapping signal according to another embodiment of the disclosure;

Fig. 9 shows a flowchart of a spectral interference cancellation method according to the disclosure;

Fig. 10 shows a flowchart of an interference signal baseband demodulation method according to one embodiment of the disclosure;

Fig. 11 shows a flowchart of an interference signal reconstruction method according to one embodiment of the disclosure; and

Fig. 12 shows a flowchart of a method for reconstructing an interference reconstructed baseband signal according to another embodiment of the disclosure.

## DETAILED DESCRIPTION

The disclosure is described below in further detail through specific embodiments in conjunction with accompanying drawings.

It is mentioned in the background technology that present dual-mode communication system mainly includes GSM & UMTS, GSM & CDMA and GSM & LTE networks. This is because only the combination of a narrow-band mode plus a wide-band mode can exist in the dual-mode communication system; thus, only the case that the three spectral

overlapping combinations including GSM & UMTS, GSM & CDMA and GSM & LTE can exist. Hereinafter, the disclosure is described in detail by taking the GSM & UMTS dual-mode communication system for example.

The dual-mode communication system includes a spectral overlapping signal consisting of a first signal and a second signal of which spectrums are overlapped. The two branches of signals in this spectral overlapping signal are interference signals relative to each other; if a receiver expects to receive the second signal, then, the first signal is an interference signal for the second signal, that is to say, the first signal is an interference signal and the second signal is a spread-spectrum signal. Whereas, if the receiver expects to receive the first signal, then, the first signal is a spread-spectrum signal and the second signal is an interference signal.

Refer to Fig. 1, a diagram of an spectrum overlapping in the present GSM & UMTS dual-mode communication system is shown; it can be known from Fig. 1 that the spectrum of the GSM signal has overlap with the spectrum of the UMTS signal, thus, mutual spectral interference is generated between them.

Fig. 2 shows an adaptive notch filtering processing system for a GSM & UMTS spectral overlapping interference frequency domain in the prior art. Here, interference processing is performed with the purpose of improving the performance of the UMTS system receiver; then, the GSM signal is an interference signal for the UMTS signal, and the UMTS signal is a spread-spectrum signal. An antenna receives a GSM & UMTS original spectral overlapping signal and transmits it to a spectral overlapping signal processing device to process. The spectral overlapping signal processing device performs Low Noise Amplification (LNA) processing, Band Pass Filtering (BPF) processing, oscillator signal mixing (MIXER) processing, Low-Pass Filtering (LPF) processing, Analogue-to-Digital Conversion (ADC) processing and Digital Down-Conversion (DDC) processing in turn on the received signal so as to achieve the purpose of performing radio frequency and intermediate frequency processing on the GSM & UMTS original spectral overlapping signal. The spectral overlapping signal processing device sends the GSM & UMTS spectral overlapping signal obtained after processing to a GSM baseband signal demodulation device to demodulate. Meanwhile, the spectral overlapping signal processing device also sends the GSM &UMTS spectral overlapping signal obtained after processing to an Adaptive Notch Filter (ANF) to perform interference cancellation processing, and then the processed spectral signal is sent to a UMTS baseband signal demodulation device to perform corresponding demodulation. Finally, the GSM baseband signal demodulation device sends the spectral signal obtained after demodulation to a GSM base station controller, and the UMTS baseband signal demodulation device sends the spectral signal obtained after demodulation to a UMTS base station controller, so as to achieve the purpose of adaptive-filtering the GSM & UMTS spectral overlapping signal. However, when the system shown in Fig. 2 is adopted to perform interference cancellation processing, loss of SNR of useful information in the UMTS signal is relatively big; although voice service can be used normally, data service probably cannot be normally used because of sharp decrease in capacity caused by serious deterioration of SNR of high-speed service. Thus, the device shown in Fig. 2 cannot well resolve the problem that useful information in a spread-spectrum signal is suppressed during the process of interference cancellation processing of the spectral overlapping signal.

In order to solve the problem existing in the system shown in Fig. 2 that information amount loss of useful information in a spread-spectrum signal is big during the process of interference cancellation processing on the spectral overlapping signal, the disclosure provides a device, method and system of spectral interference cancellation processing for a dual-mode communication system, which can effectively solve the problem that SNR loss of a spectrum signal is big caused by the useful information in the spread-spectrum signal is suppressed during the interference cancellation processing, thereby guaranteeing the coverage rate and capacity of the spread-spectrum signal and greatly improving the performance of the spread-spectrum signal system receiver.

In order to solve the technical problem above, the main idea of the disclosure is that: a receiver performs interference signal baseband demodulation and interference signal reconstruction on a received spectral overlapping signal in a dual-mode communication system, to reconstruct an interference filtered signal interferenced by little spread-spectrum signal; and the receiver performs, using the reconstructed interference filtered signal, interference cancellation processing on the spectral overlapping signal subjected to delay processing. With this technical scheme, the suppressed amount of useful information in the spread-spectrum signal is effectively reduced during the spectral interference cancellation processing, and the system performance of corresponding spectral signal receiver is improved.

Here, a detailed illustration is provided by taking improving the performance of the UMTS signal system receiver in the GSM & UMTS dual-mode communication system for example too. Correspondingly, the UMTS signal is the signal the receiver expects to receive, that is, the spread-spectrum signal; and the GSM signal is the interference signal for the UMTS signal; after interference signal baseband demodulation, a GSM interference baseband signal is obtained; after interference signal reconstruction processing, a GSM interference filtered signal is obtained; and after interference cancellation processing, the UMTS signal, that is, spread-spectrum filtered signal, is obtained. By such analogy, corresponding naming can be performed correspondingly.

Fig. 3 shows a spectral interference canceiiation system according to the disclosure. The interference cancellation system includes an interference cancellation device arranged in the system. Since a GSM & UMTS spectral overlapping signal is deployed as a manner of mesh, the GSM signal seriously interferes with the UMTS signal; if no measure is adopted, the coverage rate of the UMTS signal would be shrunk seriously, even the UMTS signal could

cause the system to be unavailable due to serious uplink deterioration. Therefore, an interference signal reconstruction module and a delay processing module are added in the interference cancellation device.

The interference cancellation device includes a first branch and a second branch, wherein the first branch includes an interference signal baseband demodulation module and an interference signal reconstruction module which are connected in turn; the second branch includes a delay processing module and an interference cancellation module which are connected in turn; an antenna receives a GSM & UMTS original spectral overlapping signal, and then the spectral overlapping signal processing device processes the treatment as same as Fig. 2 so as to achieve the purpose of performing radio frequency and intermediate frequency processing on the GSM & UMTS original spectral overlapping signal.

The spectral overlapping signal processing device sends the GSM & UMTS spectral overlapping signal obtained after processing to the first branch and the second branch respectively. The interference signal baseband demodulation module performs interference signal baseband demodulation processing on the received GSM & UMTS spectral overlapping signal to obtain a GSM interference baseband signal and sends the GSM interference baseband signal obtained after demodulation to the interference signal reconstruction module and the interference signal base station controller respectively. The interference signal reconstruction module performs interference signal reconstruction using the GSM interference baseband signal to reconstruct a GSM interference filtered signal, wherein the GSM interference filtered signal is a GSM signal interferenced by little UMTS signal. The interference signal reconstruction module sends the interference filtered signal to the interference cancellation module.

The delay processing module performs first delay processing on the received GSM& UMTS spectral overlapping signal to obtain a GSM & UMTS spectral overlapping signal subjected to delay processing; the interference cancellation module performs subtraction calculation between the received GSM & UMTS spectral overlapping signal and GSM interference filtered signal, thus, the GSM signal in the GSM & UMTS spectral overlapping signal is cancelled out; after the subtraction processing of the interference cancellation module, the output is a UMTS signal containing little GSM signal, that is, spread-spectrum filtered signal. The interference cancellation module sends the obtained spread-spectrum filtered signal to a spread-spectrum signal baseband to perform UMTS baseband demodulation, then, the spread-spectrum baseband demodulation signal obtained after the demodulation processing is sent to a spread-spectrum signal base station controller. Through the processing of the interference cancellation module, the GSM interference signal overlapped in the UMTS signal is cancelled out, thus, the GSM signal in the GSM & UMTS spectral overlapping signal is eliminated, which makes the spread-spectrum signal base station controller receive a UMTS baseband demodulation signal interference by little GSM signal, that is, the spread-spectrum baseband demodulation signal; therefore, the purpose of spectral interference cancellation processing is achieved on the spectral overlapping signal in the GSM & UMTS dual-mode communication system.

Embodiment 1

As shown in Fig. 4, the interference signal baseband demodulation module includes a first frequency-shift sub-module, a low-pass filtering sub-module, a digital down-conversion sub-module, a demodulation sub-module, a data storage sub-module, a decoding sub-module which are connected in turn, so as to perform first frequency-shift processing, low-pass filtering processing, digital down-conversion processing, demodulation processing, data storage and decoding processing in turn on a received GSM & UMTS spectral overlapping signal to obtain the interference baseband signal.

There are many interference signal baseband demodulation methods; and one demodulation method is described below in detail, which specifically includes processes as follows.

The first frequency-shift sub-module is configured to receive a GSM & UMTS spectral overlapping signal and to perform first frequency-shift processing. The specific operation includes: according to the carrier position of the GSM signal in the GSM & UMTS spectral overlapping signal, shifting the received GSM & UMTS spectral signal to a zero frequency position in a digital intermediate frequency. If the sampling rate of the GSM signal in the GSM & UMTS spectral signal received by the first frequency-shift sub-module is 7.68MHz, that is, $f_i$, and Formula 1 is adopted to perform the first frequency-shift processing, then a first GSM interference frequency-shift signal is obtained as follows:

$$r_{fshift}(n) = r(n) * e^{-j2\pi f_i nT} \quad \text{Formula 1}$$

wherein $f_i$ represents the carrier position of the GSM signal in the SGM & UMTS spectral signal; T represents a sampling period.

The low-pass filtering sub-module receives the first GSM interference frequency-shift signal and performs low-pass filtering processing on this signal to obtain a GSM interference filtered signal. In this way, out-of-band noise and

part of UMTS signals are filtered out; the GSM interference filtered signal and the UMTS signal which probably overlapped with the spectrum of the GSM interference filtered signal are remained only. The specific operation of low-pass filtering processing includes: the low-pass filtering sub-module receives the first GSM interference frequency-shift signal $r_{fshift}$ (n) and adopts Formula 2 to perform low-pass filtering processing on the signal:

$$r_{lpass}(n) = \sum_{m=0}^{N_{lf}-1} r_{fshift}(n-m) * h_{lf}(m) \quad \text{Formula 2}$$

wherein $N_{lf}$ represents the length of the low-pass filter; $h_{lf}$ represents the coefficient of the low-pass filter.

The digital down-conversion sub-module performs down-sampling processing on the received interference filtered signal to reduce the sampling rate of the GSM interference filtered signal so as to obtain a GSM interference down-converted signal. The GSM interference down-converted signal includes the GSM interference down-converted signal and the UMTS signal which probably overlapped with the spectrum of the GSM interference down-converted signal. The specific operation includes:

the digital down-conversion sub-module receives the interference filtered signal $r_{lpass}(n)$ and adopts Formula 3 to perform digital down-conversion (also called down-sampling processing) on the signal, to reduce the sampling rate to 270.83KHz, wherein 270.83KHz is the sampling rate of the GSM baseband signal.

$$r_{ds}(n) = r_{lpass}(1 + n * f_h / f_l) \quad \text{Formula 3}$$

wherein $f_h$ represents the original sampling rate (7.68MHz); $f_l$ represents the reduced sampling rate.

The data subjected to down-sampling processing further needs to be performed with low-pass filtering processing, that is, after processing using Formula 4, the interference down-converted signal can be obtained.

$$r_{\text{baseband}}(n) = \sum_{m=0}^{N_{\text{dimage}}-1} r_{ds}(n-m) * h_{\text{dimage}}(m) \quad \text{Formula 4}$$

wherein $N_{dimage}$ represents the length of an image-rejection filter; $h_{dimage}$ represents the coefficient of the image-rejection filter; $r_{\text{baseband}}(n)$ represents the interference down-converted signal.

It is understandable that the main purpose of down-sampling processing is to reduce the sampling rate of the interference signal in the dual-mode communication system to the baseband sampling rate of the interference signal, so as to obtain an interference down-converted signal of which the sampling rate is equal to the baseband sampling rate of the interference signal. Although the baseband sampling rate of the interference signal is fixed, the baseband sampling rates are different for different interference signals. For example, the baseband sampling rate of GSM signal is 270.83KHz, the baseband sampling rate of CDMA signal is 1.2288MHz, the baseband sampling rate of UMTS signal is 3.84MHz, and the baseband sampling rate of LTE signal is 1.536*B MHz, wherein B represents signal bandwidth. During the process of down-sampling processing of different interference signals, it is needed to select the baseband sampling rate of the corresponding signal according to actual condition.

The demodulation sub-module receives the GSM interference down-converted signal, that is, $r_{\text{baseband}}(n)$, and performs demodulation processing on this signal. The specific operation includes: subjecting the GSM interference down-converted signal to shaping filtering firstly, and then to channel estimation and Maximum Likelihood Sequence Estimation (MLSE) equalization processing. The GSM interference down-converted signal is mapped from symbol to bit after being processed. That is to say, the function of the demodulation sub-module mainly is to obtain a GSM interference demodulated signal which exists in the form of bit; actually, the interference demodulated signal obtained after demodulation is a series of burst training sequences.

Since a 20ms voice block of the obtained GSM interference demodulated signal needs 8 TDMA frames to transmit, the demodulated burst bits cannot be de-interleaved immediately; therefore, it is needed to cache each demodulated burst bit information to the data storage sub-module until the length of a voice coding block is cached; that

is to say, the data storage sub-module is configured to cache the GSM interference demodulated signal.

It is understandable that the above embodiment addresses the demodulation time needed by a 20ms GSM voice block only. Since the time length of different GSM voice blocks is different, the needed corresponding demodulation time is different too. That is, the demodulation time changes as the length of the voice block of the signal needed to be demodulated.

The decoding sub-module receives the GSM interference demodulated signal stored in the data storage sub-module, and performs de-interleaving and decoding on this signal to obtain source information, that is, GSM interference baseband signal; since the information on each burst bit belongs to two different users, the demodulated burst bit data needs to be recombined to form the bit information for the coding block to decode.

The above process is a complete GSM interference signal baseband demodulation process; through the operations above, the source information of the interference signal in the spectral overlapping signal is obtained, that is, the GSM interference baseband signal. Likewise, the same method also can be adopted to perform baseband demodulation on the CDMA signal, LTE signal and UMTS signal in the spectral overlapping signal.

Embodiment 2

As shown in Fig. 5, the interference signal reconstruction module includes a third branch and a fourth branch. The third branch includes a delay sub-module and a channel estimation sub-module which are connected in turn; the fourth branch includes a coding sub-module and a modulation sub-module which are connected in turn;
the coding sub-module codes the GSM interference baseband signal to obtain a GSM interference coded signal; the modulation sub-module modulates the GSM interference coded signal to obtain a GSM interference modulated signal; the specific process includes:

the coding sub-module performs coding, intra-frame interleaving, and block interleaving between different coding blocks on the GSM interference baseband signal. The coding blocks to different users are allocated to a burst slot through block interleaving manner. After the processing of the coding sub-module, a GSM interference coded signal is obtained; actually, the GSM interference coded signal still exists in the form of bit;

the modulation sub-module mainly modulates the GSM interference coded signal which is allocated to different TDMA frames and slots after coding, modulates each group of burst bits to a burst pulse, modulates and maps multiple groups of burst bits of a user to the same slot position of multiple continuous TDMA frames. After the modulation processing, a GSM interference modulated signal which exists in the form of symbols is obtained.

The delay sub-module performs second delay processing on the received GSM interference down-converted signal obtained after processed by the digital down-conversion sub-module to obtain a GSM interference delayed signal; the channel estimation sub-module performs channel estimation using the GSM interference delayed signal and the GSM interference modulated signal to obtain a GSM interference estimated signal; in this embodiment, the specific operation includes: receiving $r_{\text{baseband}}(n)$ and delaying it; performing channel estimation according to the delayed $r_{\text{baseband}}(n)$ and the GSM interference modulated signal, to obtain the GSM interference estimated signal.

The interference signal reconstruction module further includes an interference reconstruction filtering sub-module, a digital up-conversion sub-module and a second frequency-shift sub-module which are connected in turn, wherein the interference reconstruction filtering sub-module performs interference reconstruction filtering processing on the received GSM interference estimated signal and GSM interference modulated signal to obtain a GSM interference reconstructed baseband signal. The digital up-conversion sub-module performs digital up-conversion processing (also called over-sampling processing) on the GSM interference reconstructed baseband signal to obtain a GSM interference up-converted signal. The second frequency-shift sub-module performs second frequency-shift processing on the GSM interference up-converted signal to obtain a GSM interference filtered signal.

Supposing the reconstructed GSM interference reconstructed baseband signal is $gsm_{rst}(n)$, the digital up-conversion sub-module performs over-sampling processing on the $gsm_{rst}(n)$ to restore the sampling rate of the GSM interference reconstructed baseband signal to the sampling rate of the GSM & UMTS spectral overlapping signal, that is, to 7.68MHz. Specifically, Formula 5 and Formula 6 are adopted to restore the sampling rate:

$$\text{gsm}_{\text{us}}(1 + n * f_h / f_l) = \text{gsm}_{\text{rst}}(n) \qquad \text{Formula 5}$$

$$\mathrm{gsm}_{\mathrm{upsample}}(n)=\sum_{m=0}^{N_{\mathrm{upimage}}-1}\mathrm{gsm}_{\mathrm{us}}(n-m)*h_{\mathrm{upimage}}(m)$$ Formula 6

wherein $N_{dimage}$ represents the length of an image-rejection filter; $h_{dimage}$ represents the coefficient of the image-rejection filter; $\mathrm{gsm}_{\mathrm{upsample}}(n)$ represents the interference up-converted signal obtained after over-sampling.

The second frequency-shift sub-module receives the GSM interference up-converted signal and performs second frequency-shift processing on this signal to obtain a GSM interference filtered signal. The specific operation includes: receiving $\mathrm{gsm}_{\mathrm{upsample}}(n)$ and adopting Formula 7 to restore the $\mathrm{gsm}_{\mathrm{upsample}}(n)$ carrier signal from the zero frequency position in the digital intermediate frequency to the same carrier position as the GSM signal in the GSM & UMTS spectral overlapping signal.

$$\mathrm{gsm}_{\mathrm{reconstruction}}(\mathrm{n})=\mathrm{gsm}_{\mathrm{upsample}}(n)*e^{j2\pi f_i nT}$$ Formula 7

wherein $\mathrm{gsm}_{\mathrm{reconstruction}}$ represents the GSM interference filtered signal obtained after the second frequency-shift processing.

It is understandable that the above content describes one reconstruction manner of the interference filtered signal only; during the reconstruction of the interference filtered signal, the above reconstruction manner can be adopted, but it is not limited to this reconstruction manner. With the reconstruction manner of the interference filtered signal provided in this embodiment, UMTS interference filtered signal, CDMA interference filtered signal and LTE interference filtered signal also can be reconstructed.

Embodiment 3

As shown in Fig. 6, the interference reconstruction filtering sub-module specifically includes a filter coefficient estimation unit, a filter coefficient adjustment unit, a power estimation unit, a noise estimation unit and a reconstruction filtering unit.

The filter coefficient estimation unit estimates a channel response using the pilot information of the received GSM interference demodulated signal and the pilot information of the GSM interference estimated signal, to obtain a filter estimated coefficient; the specific operation includes: constructing a training matrix T according to the burst training sequences of the received GSM interference demodulated signal, wherein T is the training matrix of *(N-L)xL* dimensions, wherein N represents the length of the burst training sequence of the GSM interference demodulated signal and L represents the dispersive length of channel. r represents a group of cached GSM interference estimated signals of which the length is N, that is,

$$\begin{bmatrix} r(0) \\ r(2) \\ \vdots \\ r(N-1) \end{bmatrix};$$

subjecting the training matrix to convolution sum with a corresponding data *Tab* $(T^H T)^{-1} T^H$ in a lookup table to obtain a channel response $\hat{h}$, that is, filter estimated coefficient

$$\sum_{i=0}^{L}\sum_{i=0}^{N-1}Tab(i,j)r(j).$$

The power estimation unit is configured to receive the GSM interference estimated signal and to estimate the power; one method for estimating the power includes: calculating a mean-square value of cached data r, that is, calculating the average power of the GSM interference estimated signal by adopting the method of $|\bullet|^2$ modulus square.

The noise estimation unit is configured to receive all noises during reconstruction filtering process and to estimate the noise coefficient, to obtain a noise estimated coefficient; the specific operation includes: estimating noise

square variance $R_v$ using the SNR of the received GSM interference signal and the training matrix T, wherein $R_v=N_0 (T^H T)^{-1}$, wherein $N_0$ represents a noise power; calculating the error vector between the current GSM interference reconstructed baseband signal and the GSM interference estimated signal; if the error vector is less than the noise square variance $R_v$, going to the operation of the filter coefficient adjustment unit; if the error vector is larger than the noise square variance $R_v$, increasing the length of the training sequences of channel estimation, that is, increasing the length of N, and re-estimating the filter coefficient and re-estimating the noise square variance $R_v$, repeating the above process until the error vector between the current GSM interference reconstructed baseband signal and the GSM interference estimated signal is less than the noise square variance $R_v$, then going to the operation of the filter coefficient adjustment unit.

The filter coefficient adjustment unit adjusts the filter coefficient using the received filter estimated coefficient and noise estimated coefficient, to obtain a filter adjusted coefficient $h_i$.

The reconstruction filtering unit is configured to receive the GSM interference modulated signal and the filter adjusted coefficient, to perform reconstruction filtering processing and to output a GSM interference reconstructed baseband signal, that is, the GSM interference reconstructed baseband signal with little UMTS signal spectral overlap.

It is understandable that the above content describes one process of interference reconstruction filtering only; however, there are many interference reconstruction filtering methods. With the method provided by this embodiment, an interference reconstructed baseband signal can be formed.

Embodiment 4

Fig. 7 and Fig. 8 show a diagram of a GSM & UMTS spectral overlapping signal. Similarly, this embodiment is illustrated by taking improving the performance of the system receiver of the UMTS signal for example. The interference cancellation device receives a UMTS signal of which one frame has 10ms wherein the time to start receiving is $T1_{UMTS}$ and the time to end receiving is $T2_{UMTS}$. The UMTS signal start time and the GSM signal burst start time probably are not completely consistent, that is, the GSM signal burst start time might be before, simultaneous to or after the time start receiving the UMTS signal.

In Fig. 7, it is indicated that the GSM signal and UMTS signal burst start time is before the time when the system receiver starts to receive the UMTS signal, that is, before $T1_{UMTS}$, the GSM signal starts to have overlap with the UMTS signal at $T1_{GSM}$. Therefore, the burst start time of the GSM interference filtered signal to be reconstructed is $T1_{GSM}$, wherein $T1_{GSM}$ is less than or equal to $T1_{UMTS}$. The UMTS signal end time and the GSM signal burst end time probably are not completely consistent either; in Fig. 7, the UMTS signal receiving end time is $T2_{UMTS}$, and the burst end time of the GSM signal to be reconstructed is $T2_{GSM}$, wherein end time $T2_{GSM}$ is greater than or equal to $T2_{UMTS}$.

For a GSM voice block, from receiving a bit to finish receiving the last bit, 8 TDMA frames are needed to complete transmitting, namely the delay (9*8-7)*BP is 37.5ms, wherein BP is a burst period (15/26ms) of the GSM signal.

For a multi-slot configuration case, the GSM signal is transmitted in a plurality of continuous slots. The UMTS signal and the GSM signal are overlapped in part of slots, but it is still needed to reconstruct the GSM signal in all slots of the multi-slot configuration, thus, system delay is increased, that is, $(N_{multislot}-1)*BP$, wherein $N_{multislot}$ represents the number of continuous transmission slots in the multi-slot configuration of the GSM system.

Embodiment 4 describes the interference cancellation processing performed on the spectral overlapping signal on the basis of Embodiments 1, 2 and 3.

First, the interference signal baseband demodulation module performs interference signal baseband demodulation on the GSM & UMTS spectral overlapping signal received in the time period from $T1_{GSM}$ to $T2_{GSM}$, to obtain:

$$\mathbf{bits}_{user} = [Bits_{user1}, Bits_{user2}, ..., Bits_{userN}] \qquad ........ 8$$

Then, using slot information $[Slot_{user1}, Slot_{user2}, ..., Slot_{userN}]$ user carrier frequency information $[f_{user1}, f_{user2}, ..., f_{userN}]$ and user power information $[P_{user1}, P_{user2}, ..., P_{userN}]$ of each user, the interference signal reconstruction module reconstructs an interference reconstructed baseband signal in the time period from $T1_{GSM}$ to $T2_{GSM}$, that is, GSM interference reconstructed baseband signal, namely,

$$\mathbf{gsm}_{baseband} = \mathbf{gsm}_{user1} + \mathbf{gsm}_{user2} +, ...., \mathbf{gsm}_{userN} \qquad \text{Formula 9}$$

The signal sampling rate of the GSM & UMTS spectral overlapping signal processed by the spectral overlapping signal processing module is 7.68MHz, while the reconstructed GSM interference reconstructed baseband signal

$\mathbf{gsm}_{\text{baseband}}$ has a rate of 7.68M$\mathbf{gsm}_{\text{IF}}$ after being subjected to sampling processing, that is, the reconstructed GSM interference filtered signal. Intercepting the data $\mathbf{gsm}_{\text{interference}}$ of the signal $\mathbf{gsm}_{\text{IF}}$ in the time period from $T1_{UMTS}$ to $T2_{UMTS}$ so as to perform subtraction cancellation processing with the GSM & UMTS spectral overlapping signal in the time period from $T1_{UMTS}$ to $T2_{UMTS}$, that is, $\mathbf{umts}_{\text{overlap}}$:

$$\mathbf{umts}_{\text{sic}} = \mathbf{umts}_{\text{overlap}} - \mathbf{gsm}_{\text{interference}} \qquad \text{Formula 10}$$

Then, $\mathbf{umts}_{\text{sic}}$ is the needed GSM spread-spectrum filtered signal.

The GSM spread-spectrum filtered signal $\mathbf{umts}_{\text{sic}}$ subjected to cancellation processing is demodulated by the spread-spectrum signal baseband demodulation module and then the processed $\mathbf{umts}_{\text{sic}}$ is sent to the spread-spectrum signal base station controller.

The disclosure provides a spectral interference cancellation device of a dual-mode commutation system, in which the method takes the signal that the system receiver expects to receive as a spread-spectrum signal; correspondingly, the other branch of signal in the dual-mode communication system is an interference signal for the spread-spectrum signal, wherein the interference signal and the spread-spectrum signal are relative. Utilizing the overlapping characteristics of two branches of signals in a spectral overlapping signal, performs interference signal baseband demodulation and interference signal reconstruction on the spectral overlapping signal to reconstruct an interference filtered signal, wherein the reconstructed interference filtered signal is an interference signal interferenced by little spread-spectrum signal. Utilizing the interference filtered signal, performs cancellation processing on the spectral overlapping signal subjected to delay processing. In this way, the interference signal in the spectral overlapping signal is eliminated to the greatest extent, the defect in present linear prediction time-domain interference suppression technology is overcome, the capacity of the spread-spectrum signal is guaranteed and the performance of the system receiver is improved.

The disclosure further provides a spectral interference cancellation method for a dual-mode communication system; as shown in Fig. 9, the method specifically includes the following steps:

Step S1: a receiver receives a spectral overlapping signal in the dual-mode communication system.

Step S2: the receiver performs interference signal baseband demodulation processing and delay processing on the received spectral overlapping signal.

Step S3: the receiver performs interference signal reconstruction processing on an interference baseband signal obtained after the interference signal baseband demodulation processing.

Step S4: the receiver performs interference cancellation processing on the interference filtered signal, obtained after the interference signal reconstruction processing, with the spectral overlapping signal subjected to first delay processing.

In one embodiment of the disclosure, during the interference signal baseband demodulation processing, as shown in Fig. 10, the method specifically includes the following steps:

Step S21: the receiver receives the spectral overlapping signal.

Step S22: the receiver performs first frequency-shift processing on the spectral overlapping signal to obtain a first interference frequency-shift signal.

Step S23: the receiver performs low-pass filtering processing on the first interference frequency-shift signal to obtain an interference filtered signal.

Step S24: the receiver performs digital down-conversion processing on the interference filtered signal obtained after the low-pass filtering processing, to obtain an interference down-converted signal.

Step S25: the receiver receives the interference down-converted signal and performs demodulation processing, to obtain an interference demodulated signal.

Step S26: the receiver stores the interference demodulated signal obtained after the demodulation processing.

Step S27: the receiver performs decoding processing on the interference demodulated signal cached in a storage module to obtain source information, that is, the interference baseband signal.

In one embodiment of the disclosure, during the interference signal reconstruction, as shown in Fig. 11, the method specifically includes the following steps:

Step S31: the receiver receives the interference baseband signal obtained after processed by the interference baseband demodulation module, and performs coding processing and modulation processing to obtain an interference modulated signal; meanwhile, the receiver receives the interference down-converted signal obtained after processed by the digital down-conversion module and performs second delay processing on this signal.

Step S32: the receiver estimates a channel response according to the received interference modulated signal and the interference down-converted signal subjected to the second delay processing to obtain an interference estimated signal.

Step S33: the receiver performs interference reconstruction filtering processing according to the interference modulated signal and the interference estimated signal to obtain an interference reconstructed baseband signal.

Step S34: the receiver performs digital up-conversion processing on the interference reconstructed baseband signal to obtain an interference up-converted signal.

Step S35: the receiver performs second frequency-shift processing on the interference up-converted signal to obtain an interference filtered signal.

Embodiment 5

Actually, the process of obtaining the interference filtered signal can be divided into two steps. The first step is to perform interference signal baseband demodulation on the spectral overlapping signal, and the second step is to perform interference signal reconstruction on the interference baseband signal obtained after demodulation to obtain an interference filtered signal. The interference signal reconstruction module just implements the reconstruction of the interference filtered signal using the interference baseband signal obtained after demodulated by the interference signal baseband demodulation module. When processes the interference signal reconstruction, it further can be divided into two phases, including reconstructing the interference reconstructed baseband signal and performing up-sampling processing and second frequency-shift processing on the reconstructed interference reconstructed baseband signal. It can be known from Embodiment 2 and Embodiment 3 that, during the process from the spectral overlapping signal to the interference constructed baseband signal, it is needed to perform demodulation processing, data storage, decoding processing, coding processing and modulation processing in turn on the demodulated interference down-converted signal; the result of such processing is that the delay for reconstructing the interference reconstructed baseband signal is relatively large. For the GSM & UMTS dual-mode communication system, the delay of processing a voice user, that is, 20ms voice block, reaches 37.5ms; to the defect that some UMTS services of high demand on delay cannot meet the requirement, an optimization method of Embodiment 5 is provided, that is, each burst bit data of the GSM interference demodulated signal demodulated out by the demodulation sub-module is no longer cached, but reconstructs directly to each burst bit of the interference demodulated signal, that is, the interference reconstructed baseband signal is reconstructed using a manner of burst in turn. As shown in Fig. 12, the reconstruction process of the interference reconstructed baseband signal specifically includes the following steps:

Step S01: performing demodulation processing on the GSM interference down-converted signal; specifically, shaping-filtering the GSM interference down-converted signal firstly, and then performing channel estimation and MLSE equalization processing to map the GSM interference down-converted signal from symbol to bit. The bit information corresponding to each burst is taken as a processing data block. Meanwhile, the interference down-converted signal is subjected to third delay processing.

Step S02: re-modulating the obtained burst bit data to a burst pulse, modulating and mapping the data of multiple users on different carriers to one same slot position of one TDMA frame so as to reconstruct a GSM interference modulated signal in one slot.

Step S03: estimating a channel response using the GSM interference delayed signal, obtained after the third delay processing, and the GSM interference modulated signal subjected to modulation processing, to obtain a GSM

interference estimated signal.

Step S04: performing interference reconstruction filtering processing according to the GSM interference estimated signal, subjected to channel estimation processing, and the GSM interference modulated signal subjected to modulation processing, to recover the GSM interference reconstructed baseband signal which experienced channel fading and eliminated the spread-spectrum signal interference.

The GSM interference reconstructed baseband signal reconstructed by the manner of burst in turn is subjected to digital up-conversion processing and second frequency-shift processing, to obtain a GSM interference filtered signal.

The GSM interference modulated signal reconstructed by the manner of burst in turn may be different from the GSM interference modulated signal reconstructed by the manner of non-burst in turn. Thus, the generated GSM interference estimated signals probably are different. Therefore, the GSM interference reconstructed baseband signal reconstructed by the manner of burst in turn may be different from the GSM interference reconstructed baseband signal reconstructed by the manner of non-burst in turn.

When adopting the method in Embodiment 5 to reconstruct the GSM interference reconstructed baseband signal, a burst reconstruction module reconstructs the GSM interference reconstructed baseband signal with a burst slot as a unit, wherein the delay of processing one burst is 0.557ms, which is far less than the time of completely processing a 20ms voice block, thus, the capability for performing real-time service of the interference cancellation device is improved. Similarly, during the reconstruction of interference reconstructed baseband signal of other signal, the reconstruction manner of burst in turn a!so can be adopted; in this way, not only the purpose of reconstructing an interference reconstructed baseband signal is achieved, but also the delay generated in the reconstruction process of the interference reconstructed baseband signal is reduced.

The disclosure provides a spectral interference cancellation method in a dual-mode communication system, which can be applied to the GSM & UMTS, GSM & CDMA and GSM & LTE dual-mode communication system; the above description provides the processing method in the GSM & UMTS when the GSM signal is an interference signal; if the system performance of the GSM receiver is to be improved, it is needed to reconstruct a UMTS interference filtered signal according to the spectral overlapping signal, and then to perform corresponding interference cancellation processing. If the method is applied to the GSM & CDMA, in order to improve the system performance of the CDMA signal receiver, it is also needed to reconstruct a GSM interference filtered signal according to the GSM & CDMA spectral overlapping signal and then to perform interference cancellation processing with the delayed GSM & CDMA spectral overlapping signal, and so on. Therefore, the spectral overlapping signal includes three spectral overlapping combinations, namely, GSM & UMTS overlapping signal, GSM & CDMA overlapping signal and GSM & LTE overlapping signal; if the interference filtered signal is one signal in any combination of the three spectral overlapping combinations, the spread-spectrum filtered signal is the other signal in said any combination.

Meanwhile, the disclosure further provides a spectral interference cancellation system which includes a spectral overlapping signal processing device, a spread-spectrum signal baseband demodulation device, a spread-spectrum signal base station controller, an interference signal base station controller, and a spectral interference cancellation device. The spectral overlapping signal processing device in the spectral interference cancellation system receives an original spectral overlapping signal, and performs radio frequency and intermediate frequency processing to obtain a spectral overlapping signal; the spectral interference cancellation device receives the spectral overlapping signal and performs interference cancellation processing, and sends an obtained interference baseband signal to the interference signal base station controller, and sends an obtained spread-spectrum filtered signal to the spread-spectrum signal baseband demodulation device; the spread-spectrum signal baseband demodulation device performs baseband demodulation on the spread-spectrum filtered signal and sends a spread-spectrum baseband demodulated signal obtained after processing to the spread-spectrum signal base station controller.

With the spectral interference cancellation system, interference cancellation processing can be performed to the interference signal in the spectral overlapping signal of the dual-mode communication system. In this way, the interference signal in the spectral overlapping signal is eliminated to the greatest extent, the defect in present linear prediction time-domain interference suppression technology is overcome, the capacity of the spread-spectrum signal is guaranteed and the performance of the system receiver is improved.

The above content is a detailed description made to the disclosure in conjunction with specific embodiments; it cannot be thought that the specific embodiments of the disclosure are limited to the description. For those ordinary staff in the field to which the disclosure belongs, umpty simple deductions or substitutes can be made to the disclosure without departing from the idea of the disclosure, and these deductions and substitutes are deemed to be included in the scope of protection of the disclosure.

## INDUSTRAIL APPLICABILITY

The disclosure reduces loss of SNR of useful information in a spread-spectrum signal during the process of spectral interference processing, and improves the system performance of a spread-spectrum signal receiver.

## Claims

1. A spectral interference cancellation device for a dual-mode communication system, comprising a first branch and a second branch, wherein the first branch comprises an interference signal baseband demodulation module and an interference signal reconstruction module which are connected in turn; the second branch comprises a delay processing module and an interference cancellation module which are connected in turn;
the interference signal baseband demodulation module is configured to perform interference signal baseband demodulation processing on a received spectral overlapping signal to obtain an interference baseband signal; the interference signal reconstruction module is configured to perform interference signal reconstruction processing on the interference baseband signal to reconstruct an interference filtered signal, and to send the interference filtered signal to the interference cancellation module;
the delay processing module is configured to perform first delay processing on the received spectral overlapping signal and to send the spectral overlapping signal subjected to the first delay processing to the interference cancellation module; the interference cancellation module, using the interference filtered signal, performs interference cancellation processing on the spectral overlapping signal subjected to the delay processing to obtain a spread-spectrum filtered signal.

2. The device according to claim 1, wherein the interference signal baseband demodulation module comprises a first frequency-shift sub-module, a low-pass filtering sub-module, a digital down-conversion sub-module, a demodulation sub-module, a data storage sub-module, a decoding sub-module which are connected in turn, so as to perform first frequency-shift processing, low-pass filtering processing, digital down-conversion processing, demodulation processing, data storage and decoding processing in turn on the received spectral overlapping signal to obtain the interference baseband signal.

3. The device according to claim 2, wherein the interference signal reconstruction module comprises a third branch and a fourth branch; the third branch comprises a delay sub-module and a channel estimation sub-module which are connected in turn; the fourth branch comprises a coding sub-module and a modulation sub-module which are connected in turn;
the coding sub-module codes the interference baseband signal to obtain an interference coded signal; the modulation sub-module modulates the interference coded signal to obtain an interference modulated signal;
the delay sub-module performs second delay processing on a received interference down-converted signal obtained after processed by the digital down-conversion sub-module to obtain an interference delayed signal; the channel estimation sub-module performs channel estimation using the interference delayed signal and the interference modulated signal to obtain an interference estimated signal;
the interference signal reconstruction module further comprises an interference reconstruction filtering sub-module, a digital up-conversion sub-module and a second frequency-shift sub-module which are connected in turn; the interference reconstruction filtering sub-module performs interference reconstruction filtering processing on the received interference estimated signal and interference modulated signal to obtain an interference reconstructed baseband signal; the digital up-conversion sub-module performs digital up-conversion processing on the interference reconstructed baseband signal to obtain an interference up-converted signal; the second frequency-shift sub-module performs second frequency-shift processing on the interference up-converted signal to obtain an interference filtered signal.

4. The device according to claim 3, wherein the interference reconstruction filtering sub-module comprises a filter coefficient estimation unit, a filter coefficient adjustment unit, a power estimation unit, a noise estimation unit and a reconstruction filtering unit;
the filter coefficient estimation unit is configured to estimate a filter coefficient using the pilot information of a received interference demodulated signal obtained after processed by the demodulation sub-module and the pilot information of the interference estimated signal, to obtain a filter estimated coefficient;
the power estimation unit is configured to receive the interference estimated signal and to perform power estimation, so as to obtain the power of the interference estimated signal;
the noise estimation unit is configured to receive all noises during reconstruction filtering process and to perform

noise coefficient estimation, to obtain a noise estimated coefficient;
the filter coefficient adjustment unit is configured to adjust the filter coefficient using the filter estimated coefficient and the noise estimated coefficient, to obtain a filter adjusted coefficient; and
the reconstruction filtering unit is configured to perform reconstruction filtering processing using the interference modulated signal and the filter adjusted coefficient, to obtain an interference reconstructed baseband signal.

**5.** The device according to any one of claims 1 to 4, wherein the spectral overlapping signal comprises three spectral overlapping combinations, namely, Global System for Mobile communication & Universal Mobile Telephone System (GSM & UMTS) overlapping signal, GSM & Code Division Multiple Access (CDMA) overlapping signal and GSM & Long Term Evolution (LTE) overlapping signal; if the interference filtered signal is one signal in any combination of the three spectral overlapping combinations, the spread-spectrum filtered signal is the other signal in said any combination.

**6.** A spectral interference cancellation method for a dual-mode communication system, comprising:

A. receiving, by a receiver, a spectral overlapping signal in the dual-mode communication system;
B. performing, by the receiver, interference signal baseband demodulation processing on the received spectral overlapping signal to obtain an interference baseband signal;
C. performing, by the receiver, interference signal reconstruction processing on the interference baseband signal to reconstruct an interference filtered signal;
D. performing, by the receiver using the interference filtered signal, interference cancellation processing on the spectral overlapping signal subjected to first delay processing, to obtain a spread-spectrum filtered signal.

**7.** The method according to claim 6, wherein when performing interference signal baseband demodulation processing in Step B, the method further comprises: performing, by the receiver, first frequency-shift processing, low-pass filtering processing, digital down-conversion processing, demodulation processing, data storage and decoding processing in turn on the received spectral overlapping signal to obtain the interference baseband signal.

**8.** The method according to claim 7, wherein when performing interference signal reconstruction processing in Step C, the method further comprises:

C1: performing, by the receiver, coding processing and modulation processing in turn on the interference baseband signal to obtain an interference modulated signal; meanwhile, further performing second delay processing on a received interference down-converted signal obtained after processed by the digital down-conversion submodule to obtain an interference delayed signal, and performing channel estimation using the interference delayed signal and the interference modulated signal to obtain an interference estimated signal;
C2: performing, by the receiver, interference reconstruction filtering processing on the received interference estimated signal and interference modulated signal to obtain an interference reconstructed baseband signal;
C3: performing, by the receiver, digital up-conversion processing and second frequency-shift processing in turn on the interference reconstructed baseband signal to obtain an interference filtered signal.

**9.** The method according to claim 7, wherein when performing interference signal reconstruction processing in Step C, the method further comprises:

C11: performing, by the receiver, demodulation and third delay processing on the interference down-converted signal obtained after digital down-conversion processing, to obtain an interference demodulated signal and an interference delayed signal respectively;
C12: modulating, by the receiver, the interference demodulated signal to obtain an interference modulated signal;
C13: estimating, by the receiver, a channel response using the interference modulated signal and the interference delayed signal to obtain an interference estimated signal;
C14: performing, by the receiver, interference reconstruction filtering processing using the interference modulated signal and the interference estimated signal to obtain an interference reconstructed baseband signal;
C15: performing, by the receiver, digital up-conversion processing and second frequency-shift processing in turn on the interference reconstructed baseband signal to obtain an interference filtered signal.

**10.** The method according to any one of claims 8 to 9, wherein when performing interference reconstruction filtering processing in Step C2, the method further comprises:

C21: performing, by the receiver, filter coefficient estimation using the pilot information of a received interference demodulated signal obtained after processed by the demodulation sub-module and the pilot information of the interference estimated signal, to obtain a filter estimated coefficient;
C22: performing, by the receiver, power estimation on the received interference estimated signal to obtain the power of the interference estimated signal;
C23: performing, by the receiver, noise coefficient estimation on all noises during reconstruction filtering process to obtain a noise estimated coefficient;
C24: performing, by the receiver, filter coefficient adjustment using the filter estimated coefficient and the noise estimated coefficient to obtain a filter adjusted coefficient;
C25: performing, by the receiver, reconstruction filtering processing using the interference modulated signal and the filter adjusted coefficient to obtain an interference reconstructed baseband signal.

**11.** A spectral interference cancellation system for a dual-mode communication system, comprising a spectral overlapping signal processing device, a spread-spectrum signal baseband demodulation device, a spread-spectrum signal base station controller, an interference signal base station controller, and further comprising the spectral interference cancellation device mentioned in claim 1; wherein
the spectral overlapping signal processing device receives an original spectral overlapping signal, and performs radio frequency and intermediate frequency processing to obtain a spectral overlapping signal; the spectral interference cancellation device receives the spectral overlapping signal and performs interference cancellation processing, and sends an obtained interference baseband signal to the interference signal base station controller, sends an obtained spread-spectrum filtered signal to the spread-spectrum signal baseband demodulation device; the spread-spectrum signal baseband demodulation device performs baseband demodulation on the spread-spectrum filtered signal and sends a spread-spectrum baseband demodulated signal obtained after processing to the spread-spectrum signal base station controller.

Fig. 1

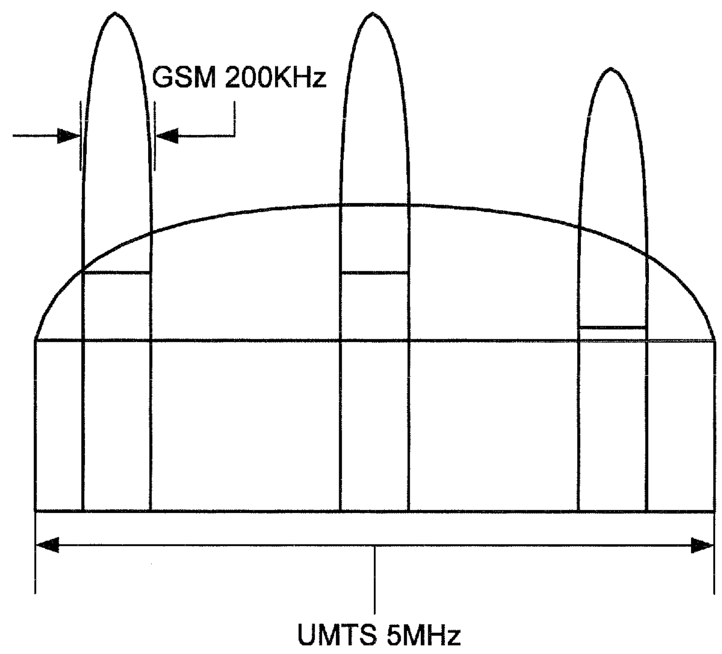
GSM 200KHz
UMTS 5MHz

Fig. 2

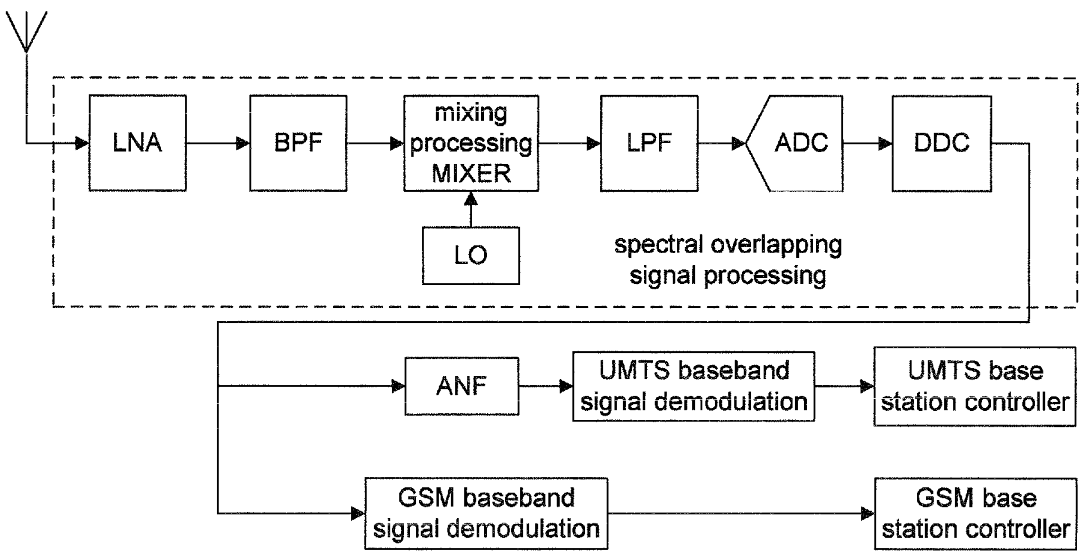
LNA
BPF
mixing processing MIXER
LPF
ADC
DDC
LO
spectral overlapping signal processing
ANF
UMTS baseband signal demodulation
UMTS base station controller
GSM baseband signal demodulation
GSM base station controller

Fig. 3

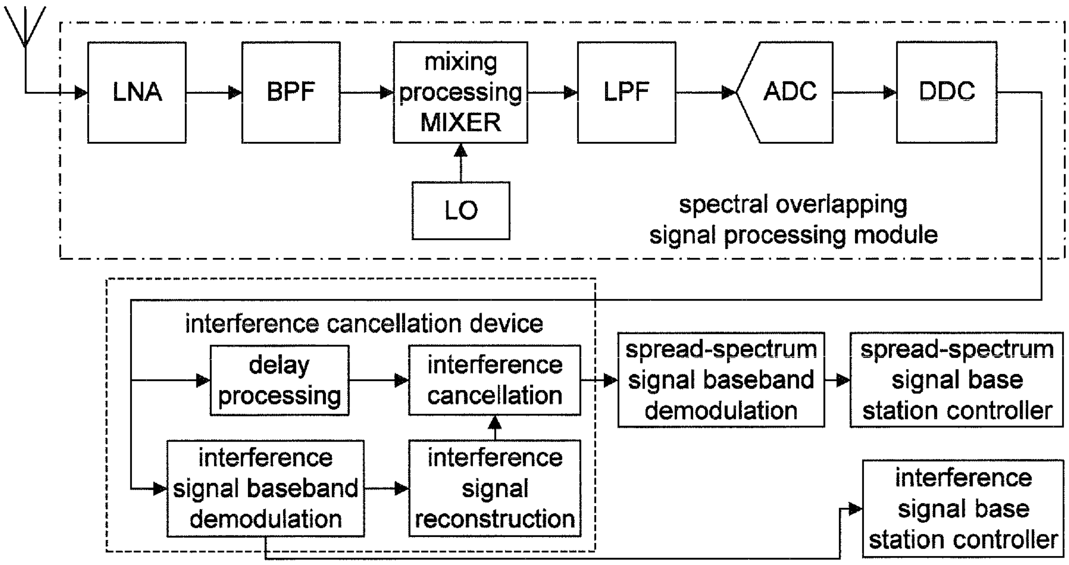


Fig. 4

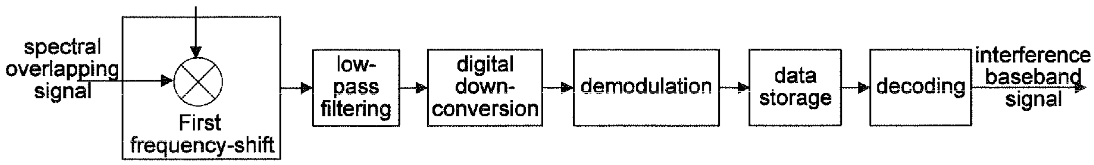


Fig. 5

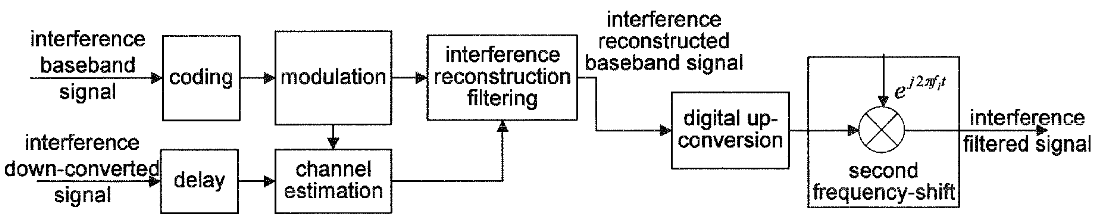

Fig. 6

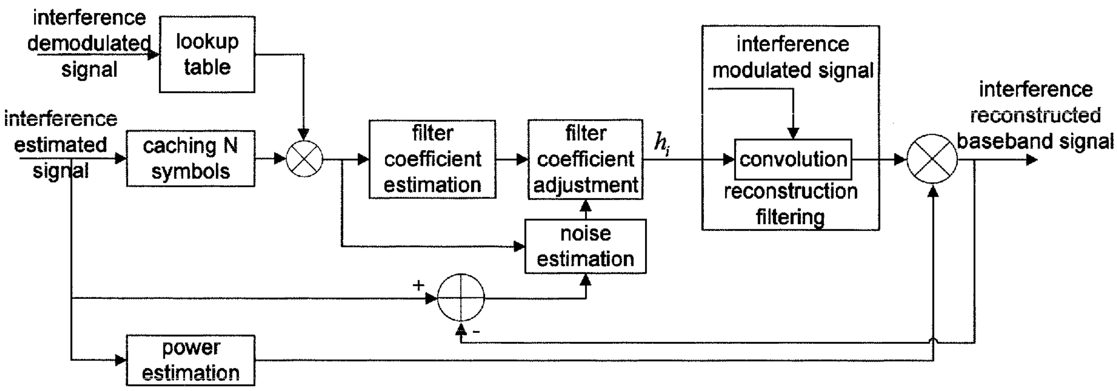


Fig. 7

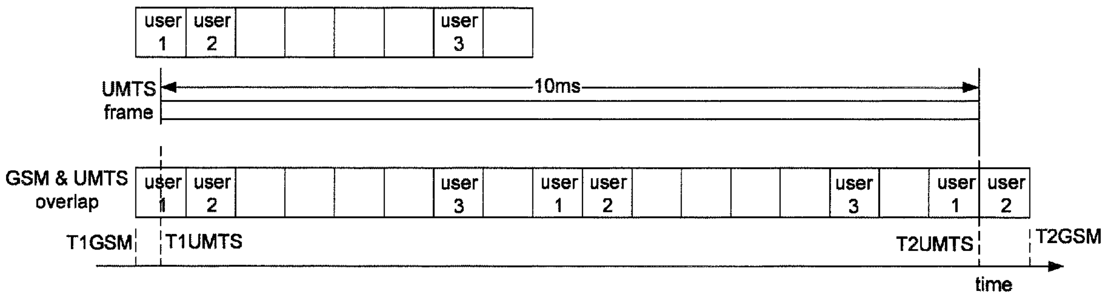


Fig. 8

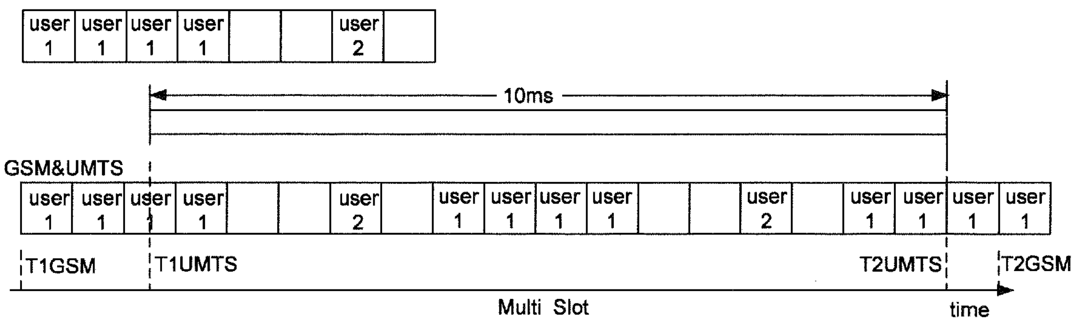

Fig. 9

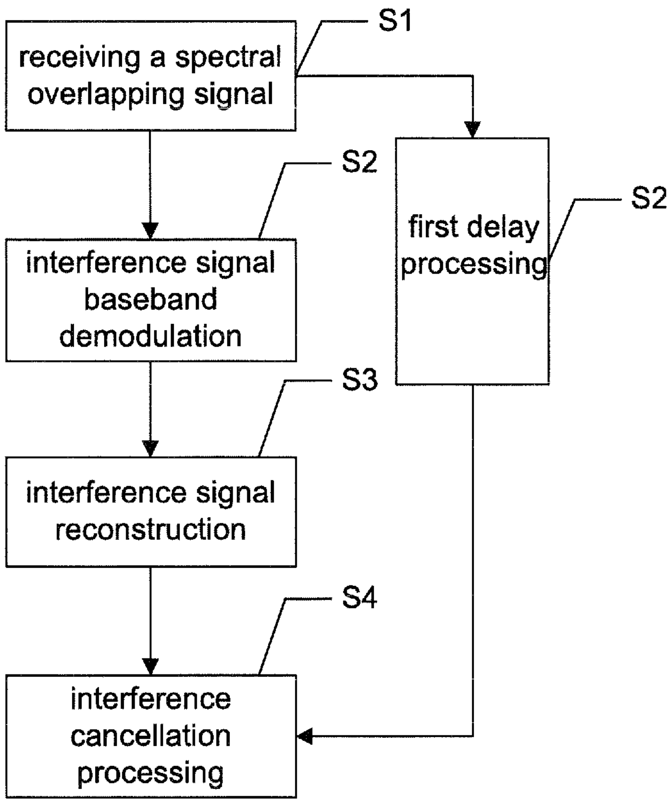
receiving a spectral overlapping signal
S1
first delay processing
S2
interference signal baseband demodulation
S2
interference signal reconstruction
S3
interference cancellation processing
S4

Fig. 10

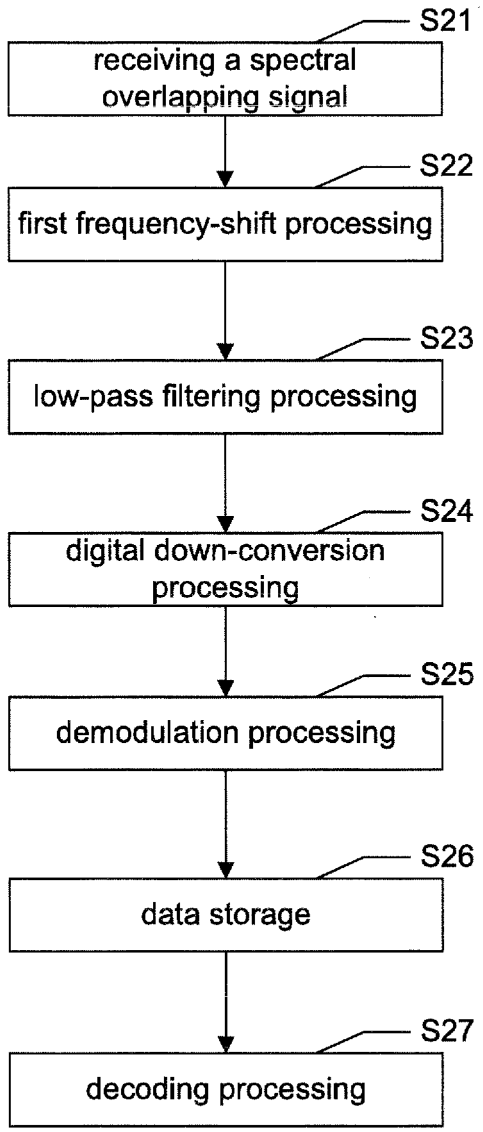
S21
receiving a spectral overlapping signal
S22
first frequency-shift processing
S23
low-pass filtering processing
S24
digital down-conversion processing
S25
demodulation processing
S26
data storage
S27
decoding processing

Fig. 11

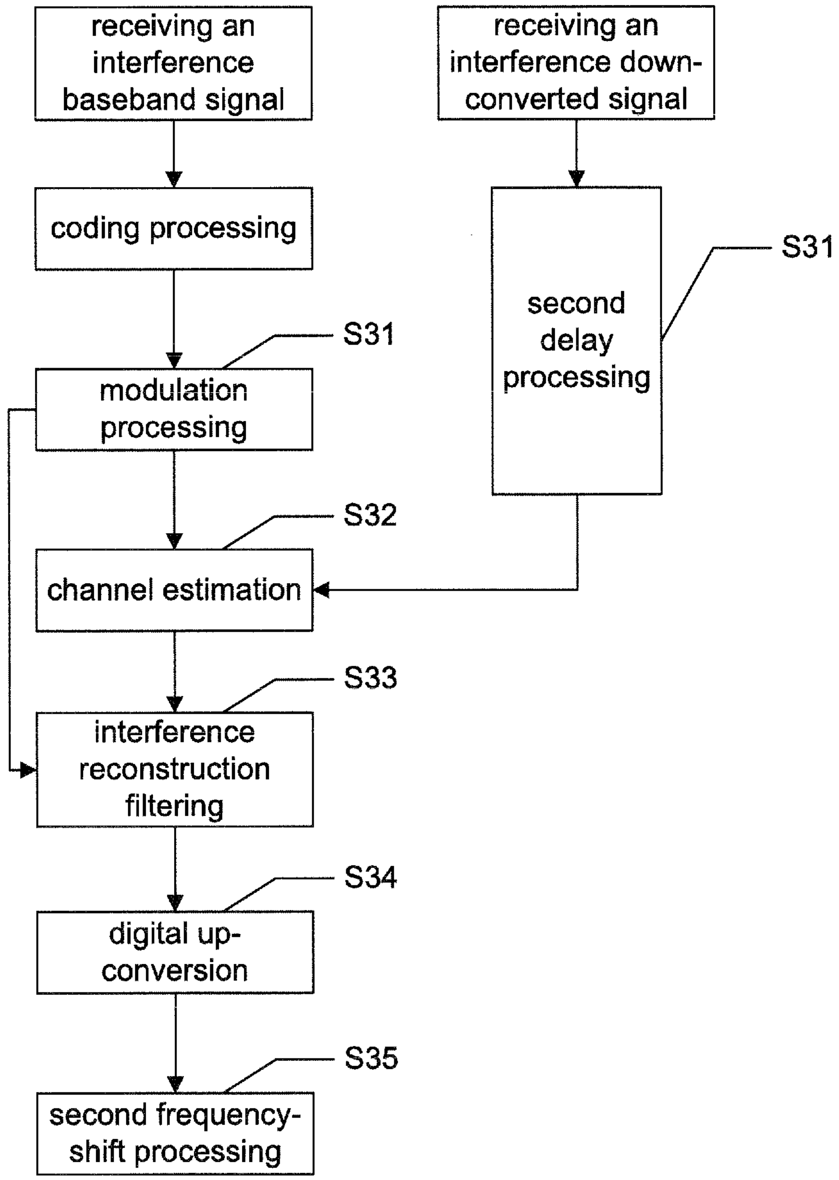
receiving an interference baseband signal
receiving an interference down-converted signal
coding processing
second delay processing
S31
S31
modulation processing
S32
channel estimation
S33
interference reconstruction filtering
S34
digital up-conversion
S35
second frequency-shift processing

Fig. 12

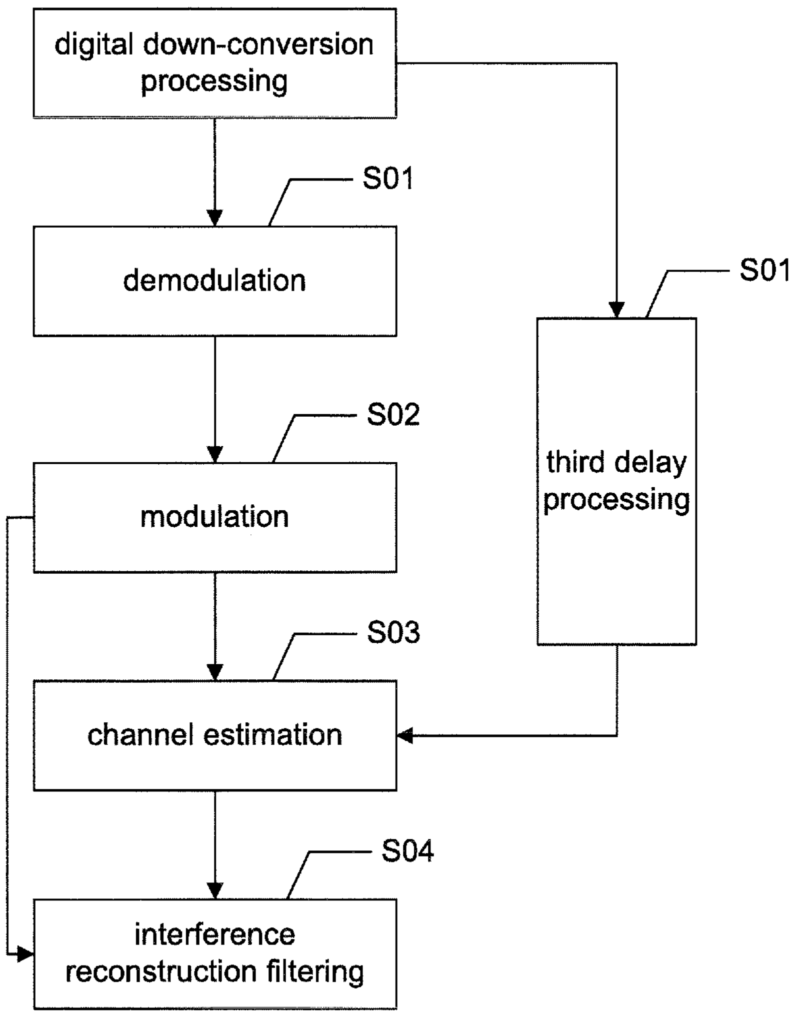
digital down-conversion processing
S01
demodulation
S01
S02
third delay processing
modulation
S03
channel estimation
S04
interference reconstruction filtering

# INTERNATIONAL SEARCH REPORT

International application No.
PCT/CN2011/080765

**A. CLASSIFICATION OF SUBJECT MATTER**

H04W88/06（2009.01）i

According to International Patent Classification (IPC) or to both national classification and IPC

B. FIELDS SEARCHED

Minimum documentation searched (classification system followed by classification symbols)

IPC：H04W88/06，H04B1/10，H04B1/707

Documentation searched other than minimum documentation to the extent that such documents are included in the fields searched

Electronic data base consulted during the international search (name of data base and, where practicable, search terms used)

CNABS; CNTXT; CNKI; VEN: FREQUENCY，SPECTRUM，OVERLAP，INTERFERENCE，ELIMINATE，DELAY，BASEBAND，BASE BAND，MODULATE，DUAL MODE，TWO MODES，TWO SYSTEMS

C. DOCUMENTS CONSIDERED TO BE RELEVANT

| Category* | Citation of document, with indication, where appropriate, of the relevant passages | Relevant to claim No. |
|---|---|---|
| PX | CN101986573A（ZTE Corporation）16 Mar.2011（16.03.2011）<br>Claims 1-11 | 1-11 |
| A | CN1741514A (SONY INT EURO GMBH) 01 Mar.2006(01.03.2006)<br>Description page 7 line 18-page 8 line 6, claims 1,5, fig.4 | 1-11 |
| A | CN101409567A (ZTE Corporation) 15 Apr.2009(15.04.2009)<br>The whole description | 1-11 |
| A | WO9400918A1 (SOTEL PHILLIP K ET AL) 06 Jan.1994(06.01.1994) the whole description | 1-11 |

☐ Further documents are listed in the continuation of Box C. ☒ See patent family annex.

* Special categories of cited documents:

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&"document member of the same patent family

| Date of the actual completion of the international search | Date of mailing of the international search report |
|---|---|
| 14 Dec. 2011(14.12.2011) | 02 Feb.2012(02.02.2012) |

Name and mailing address of the ISA
State Intellectual Property Office of the P. R. China
No. 6, Xitucheng Road, Jimenqiao
Haidian District, Beijing 100088, China
Facsimile No. (86-10)62019451

Authorized officer
Liu, shiru

Telephone No. (86-10)62411317

Form PCT/ISA /210 (second sheet) (July 2009)

**INTERNATIONAL SEARCH REPORT**
Information on patent family members

International application No.
PCT/CN2011/080765

| Patent Documents referred in the Report | Publication Date | Patent Family | Publication Date |
|---|---|---|---|
| CN101986573A | 16.03.2011 | NONE | |
| CN1741514A | 01.03.2006 | EP1630713 A1 | 01.03.2006 |
| | | US7995685 B2 | 09.08.2011 |
| | | JP2006074766A | 16.03.2006 |
| | | CN1741514B | 16.06.2010 |
| | | US2006045219 A1 | 02.03.2006 |
| CN101409567A | 15.04.2009 | NONE | |
| WO9400918A1 | 06.01.1994 | AU4653393 A | 24.01.1994 |

Form PCT/ISA /210 (patent family annex) (July 2009)